# EUROPEAN PATENT APPLICATION

(11) **EP 4 559 982 A1**
(43) Date of publication of application: **28.05.2025**
(21) Application number: 23211264.9
(22) Date of filing: 21.11.2023
(51) Int. Cl.: C09D 5/18

(54) **INTUMESCENT PAINT COMPOSITION**

(71) Applicant: Hexion Inc., Columbus, OH 43215 (US)
(72) Inventor: Augry, Ludivine, 1472 -Vieux-Genappe (BE); Vanaken, David, 3040 Neerijse (BE); Heymans, Denis, 1340 Ottignies Louvain-la-Neuve (BE); Le Fevere de Ten Hove, Cédric, 5081 Meux (La Bruyère) (BE); Havaux, Nathalie, 1435 Mont Saint Guibert (BE); Steinbrecher, Christophe, 4218 Couthuin (BE)
(74) Representative: Sonnenhauser, Thomas Martin

(57) **Abstract**

The invention refers to an intumescent paint composition comprising (a) a polymeric binder, wherein the polymeric binder comprises one or more copolymers, wherein the one or more copolymers, in total, comprise i) from 20 wt.-% to 75 wt.-%, based on the total weight of the polymeric binder, of monomer units obtainable from vinyl acetate, and ii) from 25 wt.-% to 80 wt.-%, based on the total weight of the polymeric binder, of one or more type(s) of monomer units obtainable from the vinyl ester monomers represented by formula (1): 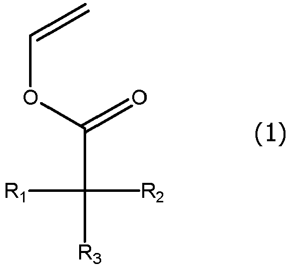 , wherein R₁, R₂, R₃ are independently selected from the group consisting of hydrogen and linear or branched unsubstituted C₁₋₁₁ alkyl groups, wherein the total number of carbon atoms of R₁, R₂, and R₃ is in the range from 1 to 13; (b) an acid donor; (c) a carbon source; and (d) a blowing agent. The invention further refers to a paint, preferably emulsion paint, comprising or consisting of the intumescent paint composition of the invention; to a use of the one or more copolymers of the invention or the intumescent paint composition of the invention for intumescent coatings; to a preparation of the intumescent paint composition of the invention to obtain the intumescent coating of the invention; to a preparation of an intumescent coating by applying the intumescent paint composition of the invention onto a surface and drying said intumescent paint composition; and to a coated article comprising an intumescent coating obtained by applying and drying the intumescent paint composition of the invention.

## Description

The present invention particularly relates to intumescent coatings based on intumescent emulsion paints where the binder has a branched vinyl ester content between 25 wt.-% and 80 wt.-%.

### Technical background

Intumescent systems are a well-known and effective fire protection strategy. In particular, intumescent coatings present relevant benefits, like ease of processing and application on several materials like plastics, textiles, metal, and wood, without modifying their intrinsic properties. In the construction industry, intumescent coatings have gained particular relevance, especially for retarding the collapse of metal and wood structures, acting as a passive protection to allow the necessary time for safe intervention of rescue teams and building evacuation.

When exposed to sufficiently high temperatures, intumescent coatings undergo significant expansion, forming a thermally insulating carbonaceous foam. Due to environmental concerns, the industry is nowadays mostly focused on the development of waterborne formulations. Vinylic emulsion binders in particular are known for their high performance level in waterborne intumescent coatings.

### Summary of invention

Copolymers of vinyl acetate (VAM) and VeoVa vinyl esters, which are vinyl esters with branched aliphatic structures, can be used as binders for paints. Monomer units obtainable from VeoVa monomers impart hydrophobicity to the copolymers besides an improved hydrolytic stability, adhesion, water and UV resistance. According to the knowledge of the present inventors, levels of units obtainable from VeoVa monomers in copolymers used so far for intumescent paints are significantly below 30 wt.%

Surprisingly, the inventors found that a high concentration of VeoVa in the binders improves intumescence. The use of high levels of VeoVa to impart the surprisingly good intumescent properties as observed by the present inventors has not been described. The inventors found an intumescent effectiveness (e.g. fire resistance and foam expansion upon heating) for copolymers comprising a minimum content of VeoVa and a maximum content of up to 80 wt.% of VeoVa in the polymeric binder.

J. T. Pimenta et al. (Effect of binder on performance of intumescent coatings. J. Coat. Technol. Res., 2016, 13, 227 - 238) refers to waterborne resins of different types (vinylic, acrylic, and styrene-acrylic) which were incorporated in an intumescent paint formulation, and tested in terms of thermal degradation behaviour, intumescence thickness, and thermal insulation. The relevance of the ratio of vinyl acetate and vinyl esters was not realized.

K. Kalafat et al. (Comparison of fire resistance of polymers in intumescent coatings for steel structures. East.-Eur. J. Enterp. Technol., 2020, 4, 45 - 54) discloses a study on the thermal destruction of fire-retardant intumescent coating of the composition of ammonium polyphosphate/melamine/pentaerythrite/titanium dioxide/polymer, which can be applied for fire protection of steel structures. The influence of polymers of different nature - ethylene-vinyl acetate, vinyl acetate versatate, styrene acrylates, and vinyl toluene acrylate on the processes of formation of a coke layer and fire-retardant effectiveness of appropriate coatings was determined.

Y-C. Xia (Thermal Property of Waterborne Ultrathin Vac-veova Latex Intumescent Fire Retardant Coatings for Structural Steel. Materials Science and Engineering, 2017, 347 - 354) discloses a study on the thermal properties of intumescent coatings based on a Vac-veova latex.

Patent US 2015/0291810 A1 discloses an intumescent coating composition and a coated metal substrate. The composition comprises: (a) a polymeric binder; (b) an acid catalyst effective to form a polyphosphoric acid on thermal decomposition; (c) a solid carbon donor; (d) a liquid carbon donor in the form of one or more polyhydric alcohols effective to form a phosphoric acid ester on contact with phosphoric acid; (e) an expansion agent; (f) one or more pigments; (g) optionally, one or more other additives; (h) a liquid carrier for the polymeric binder. The ratio of combined components (b), (c), (e) and (f):(a) is at least 4:1 w/w. A coating composition wherein the concentration of components (b), (e) and (f) is in the range 55-75% w/w solids is further described.

However, there is still a commercial desire for intumescent compositions with improved performance properties including intumescent properties.

The present invention is therefore directed to an intumescent (preferably coating or paint) composition comprising
(a) a polymeric binder,
   wherein the polymeric binder comprises one or more copolymers,
   wherein the one or more copolymers, in total, comprise
      i) from 20 wt.-% to 75 wt.-%, based on the total weight of the polymeric binder, or based on the total weight of the one or more copolymers, of monomer units obtainable from vinyl acetate, and
      ii) from 25 wt.-% to 80 wt.-%, based on the total weight of the polymeric binder, or based on the total weight of the one or more copolymers, of one or more type(s) of monomer units obtainable from the vinyl ester monomers represented by formula (1): 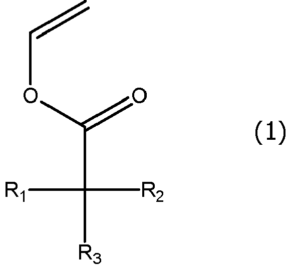
   , wherein R₁, R₂, R₃ are independently selected from the group consisting of hydrogen and linear or branched unsubstituted C₁₋₁₁ alkyl groups, wherein the total number of carbon atoms of R₁, R₂, and R₃ is in the range from 1 to 13;
(b) optionally an acid donor;
(c) optionally a carbon source; and
(d) optionally a blowing agent.

The present invention is further directed to a paint, preferably emulsion paint, comprising or consisting of the intumescent coating composition as defined herein.

The present invention is further directed to the use of one or more copolymers as defined herein or an intumescent coating composition as defined herein for intumescent coatings.

The present invention is further directed to a preparation of an intumescent coating composition by combining (a), (b), (c) and (d) as defined herein to obtain said intumescent coating.

The present invention is further directed to a preparation of an intumescent coating by applying an intumescent coating composition as defined herein onto a surface and drying said intumescent coating composition.

The present invention is further directed to a coated article comprising an intumescent coating obtained by applying and drying an intumescent coating composition as defined herein.

### Detailed description of the invention

The present invention refers to an intumescent paint composition comprising
(a) a polymeric binder,
   wherein the polymeric binder comprises, preferably consists of, one or more copolymers,
   wherein the one or more copolymers, in total, comprise, preferably the one or more copolymers consist of:
      i) from 20 wt.-% to 75 wt.-%, based on the total weight of the polymeric binder, or based on the total weight of the one or more copolymers, of monomer units obtainable from vinyl acetate, and
      ii) from 25 wt.-% to 80 wt.-%, based on the total weight of the polymeric binder, or based on the total weight of the one or more copolymers, of one or more type(s) of monomer units obtainable from the vinyl ester monomers represented by formula (1): 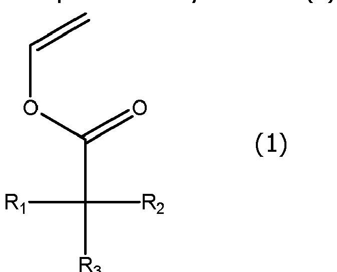
   , wherein R₁, R₂, R₃ are independently selected from the group consisting of hydrogen and linear or branched unsubstituted C₁₋₁₁ alkyl groups, wherein the total number of carbon atoms of R₁, R₂, and R₃ is in the range from 1 to 13;
(b) optionally an acid donor;
(c) optionally a carbon source; and
(d) optionally a blowing agent.

In an embodiment where the polymeric binder consists of copolymers only, the intumescent paint composition contains no further polymers. In one embodiment, the polymeric binder comprises at least 80 wt.-%, or at least 90 wt.-% or at least 95.-% copolymers based on the total weight of all polymers in the composition.

As used herein, the term "intumescent coating" refers to a coating which swells as a result of heat exposure, thus increasing in volume, and decreasing in density to form an insulative char that provides passive fire protection of surfaces or objects, such as structural elements of a building. An intumescent coating swells up to 100 times its original thickness when exposed to heat, thus forming a thermal insulation layer that protects the coated structural element beneath and avoids diffusion of combustible gases. In its broadest meaning, the term "intumescent coating" refers to a coating which increases in thickness at a temperature starting at 250°C, or 300°C or 350°C as can be obtained by fire testing following DIN 4102 Part 8 or ISO 834.

The term "intumescent paint composition" as used herein refers to a composition suitable to form an intumescent coating. More specifically, it refers to a mixture of components, which in combination are effective to impart intumescence to a coating made thereof. Here, intumescent paint compositions or intumescent coatings preferably comprise one or more, preferably all of an acid donor, a carbon source, and a blowing agent as mandatory components.

The term "binder" as used herein refers to a chemical material, which represents the film- or coating-forming component of the intumescent paint composition, wherein the binder binds all ingredients, which are typically assembled in an emulsion or suspension prior to the film- or coating-formation, together.

The term "polymeric binder" as used herein refers to a binder that comprises, preferably consists of polymers, and comprises a copolymer or a mixture of copolymers and optionally further homopolymers. Preferably all copolymers which are used comprise vinylacetate and one or more monomers of formula (1), preferably, the momomers of formula (1) are comprised in at least 30 wt.% Any organic polymer in the intumescent paint composition will be considered to be part of the polymeric binder. The term "organic polymer" refers to the nature of the monomeric units which may, generally, be attributed as organic chemical compound, and means that the main chain contains predominantly carbon atoms (i.e., at least 50 mol%).

The term "polymer" as used herein will be understood to mean a molecule that encompasses a backbone (also referred to as "main chain") of one or more distinct types of repeat units (the smallest constitutional unit of the molecule). A polymer can be a "homopolymer" when having only one type of monomer units or a copolymer when having two or more polymer units. The term "polymer" can refer to polymers of diverse architectures such as linear, branched, grafted, cyclic, or crosslinked. Further, it will be understood that polymers/copolymers may include residues from initiators, catalysts and other elements attendant to the synthesis of such a polymer, where such residues are understood as not being covalently incorporated thereto but inseparably mixed. Further, such residues and other elements, while normally removed during post polymerization purification processes, are typically mixed or comingled with the polymer such that they generally remain with the polymer when it is transferred between vessels or between solvents or dispersion media.

The term "copolymer" as used herein refers to a polymer formed by the polymerization reaction of at least two structurally different monomers. The term "copolymer", thus, also includes polymers formed by the polymerization reaction of three structurally or more different monomers.

The term "monomer unit" refers to the moieties of a polymer that correspond to the monomers after they have been polymerized. "Monomer unit" is synonymous with other terms used in a similar manner in the prior art, such as "repeating unit", "repetition unit", "monomeric unit" etc.

It is noted that not all hydrogen atoms are shown in the formulas throughout the application. Furthermore, any atom in the general formulas can be substituted by any of its isotopes. That is, any hydrogen atom can be substituted by deuterium D.

Furthermore, any carbon atom in the disclosed and/or claimed compounds can be substituted (partially or fully) by any of its isotopes, preferably ¹³C. Furthermore, any nitrogen atom in the disclosed and/or claimed compounds can be substituted (partially or fully) by ¹⁵N. Furthermore, any oxygen atom in the disclosed and/or claimed compounds can be substituted (partially or fully) by ¹⁷O. Furthermore, any phosphor atom in the disclosed and/or claimed compounds can be substituted (partially or fully) by ³¹P.

The term "linear C₁₋₁₁ alkyl" refers to a straight-chained saturated hydrocarbon group having 1 to 11 carbon atoms. Linear C₁₋₁₁ alkyl include, for example, methyl, ethyl, propyl, butyl, pentyl, hexyl, heptyl, octyl and nonyl.

The term "branched C₁₋₁₁ alkyl" refers to a branched-chained saturated hydrocarbon group having 1 to 11 carbon atoms. Branched C₁₋₁₁ alkyl include, for example, 1 - methyl ethyl, 1 -methyl propyl, 2-methyl propyl, 1 -methyl butyl, 2-methyl butyl, 3-methyl butyl, 1 -methyl pentyl, 2-methyl pentyl, 3-methyl pentyl, 4-methyl pentyl, 1 - methyl hexyl, 2-methyl hexyl, 3- methyl hexyl, 4-methyl hexyl, 5-methyl hexyl, 1 - methyl heptyl, 2-methyl heptyl, 3-methyl heptyl, 4-methyl heptyl, 5-methyl heptyl, 6-methyl heptyl, 1 -methyl octyl, 2-methyl octyl, 3- methyl octyl, 4-methyl octyl, 5-methyl octyl, 6-methyl octyl and 7-methyl octyl, 1 -ethyl propyl, 1 -ethyl butyl, 2-ethyl butyl, 1 -ethyl pentyl, 2-ethyl pentyl, 3-ethyl pentyl, 1 -ethyl hexyl, 2-ethyl hexyl, 3-ethyl hexyl, 4-ethyl hexyl, 1 -ethyl heptyl, 2-ethyl heptyl, 3-ethyl heptyl, 4-ethyl heptyl and 5-ethyl heptyl, 1 -propyl butyl, 1-propyl pentyl, 2-propyl pentyl, 1-propyl hexyl, or 2-propyl hexyl and 3-propyl hexyl.

The term "substituted" with respect to groups such alkyl groups as used herein refers to groups, wherein one or more hydrogen atoms are replaced by different atoms or groups such as halogens (e.g. Cl, Br, I, F), amines (primary, secondary, tertiary), sulphates, phosphates, ethers, esters, OH, SH, CF₃, CN, C₁₋₄ heteroalkyl, C₆₋₁₄ aryl and C₄₋₁₂ heteroaryl groups etc.

The term "unsubstituted" with respect to groups such alkyl groups as used herein refers to groups, wherein no hydrogen is replaced by a different atoms or groups such as halogens (e.g. Cl, Br, I, F), amines (primary, secondary, tertiary), sulphates, phosphates, ethers, esters, OH, SH, CF₃, CN, C₁₋₄ heteroalkyl, C₆₋₁₄ aryl and C₄₋₁₂ heteroaryl groups etc.

The term "acid donor" as used herein refers to a compound that is effective to form an acid upon thermal decomposition. The acid can react with other components in the intumescent coating / intumescent paint composition. An acid donor as used herein might also be called acid donor catalyst, acid catalyst, acid donor, acid generating compound, acid-donor agent, carbonization accelerator or an acid (catalyst) source as used in the prior art. Acid donors are typically inorganic acids or substances releasing acids at 100-250 °C.

The term "carbon source" as used herein refers to a compound that is effective to react with the acid formed from the acid donor to form esters of the carbon source and the acid formed by the acid donor. A carbon source as used herein might also be called coking agent or char former as used in the prior art. Carbon sources as used herein are polyatomic alcohols (or polyols), i.e. organic hydroxyl-containing compounds with a high content of carbon. During the reaction of the carbon source with the acid formed from the acid donor a carbonaceous char may be formed, preferably wherein the carbonaceous char is a foaming carbon matrix. The esters of the carbon source and the acid formed from the acid donor may decompose to form a foaming carbon matrix.

The term "blowing agent" as used herein refers to a compound that is effective to release gases upon thermal decomposition to achieve foaming of the carbon matrix and expending the char which still adheres to the substrate. A blowing agent as used herein might also be called foaming agent, porophore, or expansion agent as used in the prior art.

The polymeric binder may comprise a least one copolymer. Such a copolymer comprises a distinct composition of the monomer units as defined in the claims.

The polymeric binder may comprise a blend of at least two different copolymers, wherein the at least two different copolymers comprise monomer unit compositions that each differ from the monomer unit compositions defined in the claims, but the averaged monomer unit compositions are consistent with the monomer unit compositions defined in the claims.

The "total weight of the polymer binder" as referred to herein considers the weights of all organic polymers which are part of the intumescent paint composition. Any polymer in the intumescent paint composition and in the intumescent coating is part of the polymer binder.

According to the invention, the overall content of monomer units obtainable/obtained or derivable/derived from vinyl acetate and the one or more type(s) of monomer units obtainable/obtained or derivable/derived from the vinyl ester monomers represented by formula (1) of all copolymers, preferably all polymers in the composition, is decisive for the intumescent properties. For example, this means that in order to obtain a desired overall content of the one or more type(s) of monomer units obtainable/obtained or derivable/derived from the vinyl ester monomers represented by formula (1) of all copolymers, the use of one copolymer with a low content can be compensated by using a high content copolymer.

For example, the polymeric binder can comprise or consist of
- a first copolymer of 15 wt.-% of monomer units obtainable from vinyl acetate and 85 wt.-% of one or more types of vinyl ester monomer units obtainable from one or more types of vinyl ester monomers represented by formula (1), and
- a second copolymer of 85 wt.-% of monomer units obtainable from vinyl acetate and 15 wt.-% of one or more types of vinyl ester monomer units obtainable from one or more types of vinyl ester monomers represented by formula (1),
each of which would not be according to the claims when used alone, but would be according to claims if used in a mixture which provides the overall monomer content as defined in the claims.

Both alternatives (a single copolymer or a blend of at least two copolymers) are effective to impart the favourable, particular intumescent, behaviour to the intumescent paint compositions of the invention.

In the event that the requirements of the claims are met by the use of a vinylacetate homopolymer in a blend with a homopolymer of the one or more type(s) of monomer units obtainable from the vinyl ester monomers represented by formula (1), it is expected that the homopolymers of vinylacetate in particular will be hydrolysed more quickly if compared to an analogous mixture using copolymers comprising these monomer units. Vinyl acetate units will be protected against hydrolysis only if the one or more type(s) of monomer units obtainable from the vinyl ester monomers represented by formula (1) are copolymerized with vinyl acetate, leading to a random distribution of the one or more type(s) of monomer units obtainable from the vinyl ester monomers represented by formula (1) throughout the polymer chain. Therefore, the use of copolymers as defined herein is advantageous compared to an analogous blend of homopolymers.

The relative molar percentage of both the monomer units obtainable from vinyl acetate and the one or more types of vinyl ester monomer units obtainable from one or more types of vinyl ester monomers represented by formula (1) may be quantified by proton nuclear magnetic resonance (¹H-NMR), considering the relative surface of the peaks corresponding to the shift of their -CH₃ groups, respectively. An example of such quantification is presented, e.g., by X. Q. Wu et al. (Miniemulsion and macroemulsion copolymerization of vinyl acetate with vinyl versatate. J. Appl. Polym. Sci., 2002, 85, 2219 - 2229).

The vinyl acetate-derived monomer units according to the claims are obtainable via a copolymerization of at least vinyl acetate and one or more types of other monomers, such as vinyl ester monomers represented by formula (1).

The structure of vinyl acetate before polymerization is shown the following formula:

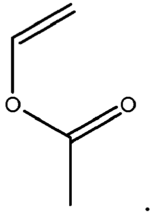

The structure of the monomer unit obtainable/obtained or derivable/derived from vinyl acetate is shown the following formula: 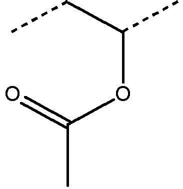 , wherein a dotted line represents a bond within the polymer backbone, i.e. to the adjacent monomer unit.

The structure of the one or more types of vinyl ester monomer units obtainable/obtained or derivable/derived from the vinyl ester monomers represented by formula (1) is shown the following formula: 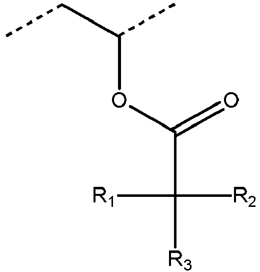
, wherein R₁, R₂, R₃ are as defined herein,
wherein a dotted line represents a bond to within the polymer backbone, i.e. to the adjacent monomer unit.

The structure of a copolymer comprising monomer units obtainable/obtained or derivable/derived from vinyl acetate and one or more types of vinyl ester monomer units obtainable/obtained or derivable/derived from the vinyl ester monomers represented by formula (1) is shown the following formula: 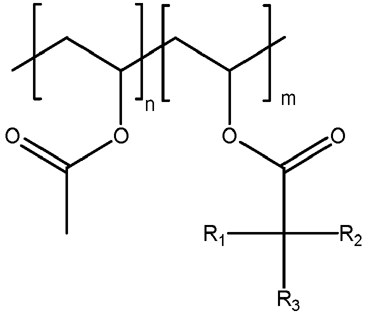
, wherein R₁, R₂, R₃ are as defined herein,
wherein n is the weight fraction or the degree of polymerization of the monomer units obtainable/obtained or derivable/derived from vinyl acetate,
wherein m is the weight fraction or the degree of polymerization of the one or more types of vinyl ester monomer units obtainable/obtained or derivable/derived from one or more types of vinyl ester monomers represented by formula (1). Of course, the copolymers can comprise a sequence of one or more of monomer units. Typical weight average molecular weights of the copolymers are between 20 000 and 2 000 000 daltons, preferably between 100 000 and 1 000 000 daltons, measured using gel permeation chromatography technique.

Although vinyl acetate-based polymers are widely used in the field of polymeric binders, they are known to have low durability. The one or more types of vinyl ester monomer units obtainable/obtained or derivable/derived from the vinyl ester monomers represented by formula (1) compensate for low durability of vinyl acetate -based binders. The one or more types of vinyl ester monomer units obtainable/obtained or derivable/derived from the vinyl ester monomers represented by formula (1) due to the total number of carbon atoms of R₁, R₂, and R₃ being in the range from 1 to 13, preferably the range from 6 to 11, more preferably the range from 6 to 9, increase the hydrophobicity, impart a high branching level, and thereby improve the stability of the respective copolymers. Copolymers used as binders comprising one or more types of vinyl ester monomer units obtainable/obtained or derivable/derived from the vinyl ester monomers represented by formula (1) can also protect additives sensitivity to humidity and acids (such as ammonium polyphosphate (APP), or pentaerithritol (PER)).

Moreover, the one or more types of vinyl ester monomer units obtainable from one or more types of vinyl ester monomers represented by formula (1) exhibit a specific thermal degradation mechanism, which improves the char formation of respective intumescent coatings. More specifically, respective copolymers decompose in a twostep process (i-chain stripping process -deacetylation- combined with chain scission reactions leading to polyene formation and ii- its chain scission), whereas acrylic and styrene-acrylic resins are known to decompose mainly by chain scission mechanisms directly into volatile monomers [J. T. Pimenta et al., Effect of binder on performance of intumescent coatings. J. Coat. Technol. Res., 2016, 13, 227 - 238; K. Kalafat et al., Comparison of fire resistance of polymers in intumescent coatings for steel structures. East.-Eur. J. Enterp. Technol., 2020, 4, 45 - 54.]. Besides, vinyl acetate binders present lower thermal decomposition temperatures than the acrylic and styrene-acrylic. As a result, when melamine starts decomposing into gaseous products, styrene-acrylic binders present different elasticity behaviour which hinders the uniform foam expansion in the case of s acrylic and styrene-acrylic systems. This enables the copolymers of the present invention to outperform particularly acrylic systems.

Furthermore, when aiming at a total number of carbon atoms of R₁, R₂, and R₃ to be in the range from 1 to 13, a polymerization in a controlled manner yielding copolymers of targeted molecular weights or degrees of polymerization and targeted monomer compositions via emulsion polymerization is enabled. Here, for example, it is known that emulsion polymerizations using monomer units obtainable/obtained or derivable/derived from one or more types of vinyl ester monomers represented by formula (1) with, however, a total number of carbon atoms of R₁, R₂, and R₃ being 14 or higher hampers a controlled polymerization process.

Typically, monomer units obtainable/obtained or derivable/derived from vinyl acetate are simply referred as "vinyl acetate", e.g. as in poly(vinyl acetate).

Typically, the one or more types of vinyl ester monomer units obtainable/obtained or derivable/derived from the vinyl ester monomers represented by formula (1) may be simply referred as "vinyl esters of branched acids".

Suitable vinyl esters for the one or more types of vinyl ester monomer units obtainable from one or more types of vinyl ester monomers represented by formula (1) include those derived from branched acids such as pivalic acid, 2-ethyl hexanoic, neo acids (also known as VERSATIC ACID ^{™} from Hexion Inc.) with the total carbon atoms in R₁, R₂, R₃ are 7, 8, 9, and 10. Examples of these vinyl ester monomers include vinyl pivalate, vinyl 2 ethylhexanoate, vinyl neodecanoate and vinyl neononanoate and combinations thereof. Commercial examples of the vinyl ester monomers include VeoVa 9, VeoVa 10, and combinations thereof, commercially available from Hexion Inc., (company name) of Columbus, Ohio and vinyl laurate available from Wacker Chemie AG (company name) or others.

In one embodiment the total number of carbon atoms of R₁, R₂, and R₃ is in the range from 6 to 11.

In one embodiment the total number of carbon atoms of R₁, R₂, and R₃ is in the range from 6 to 9.

In one embodiment the total number of carbon atoms of R₁, R₂, and R₃ is in the range from 6 to 8.

In one embodiment the total number of carbon atoms of R₁, R₂, and R₃ is in the range from 7 to 8.

In one embodiment one of R₁, R₂, R₃ is Methyl.

In one embodiment one or two of R₁, R₂, R₃ are hydrogen, or one of R₁, R₂, R₃ is hydrogen, preferably none of R₁, R₂, R₃ is hydrogen.

In one embodiment the total number of carbon atoms of R₁ and R₂ is 6 or 7, and R₃ is methyl.

In one embodiment the total number of carbon atoms of R₁ and R₂ is 6 or 7, and R₃ is methyl.

In one embodiment the total number of carbon atoms of R₁ and R₂ is 6, and R₃ is methyl.

In one embodiment the total number of carbon atoms of R₁ and R₂ is 7, and R₃ is methyl.

In one embodiment the number of carbon atoms of R₁ is 4, the number of carbon atoms of R₂ is 2, and R₃ is H.

In one embodiment one or more types of vinyl ester monomers represented by formula (1) are selected from the group consisting of vinyl neodecanoate and vinyl neononanoate.

In one embodiment one or more types of vinyl ester monomers are represented by formula (1) is vinyl neodecanoate.

In one embodiment the intumescent paint composition comprises
(b) optionally an acid donor;
(c) optionally a carbon source; and
(d) optionally a blowing agent.

In one embodiment the intumescent paint composition optionally comprises the acid donor.

In one embodiment the intumescent paint composition optionally comprises the carbon source.

In one embodiment the intumescent paint composition optionally comprises the blowing agent.

In one embodiment the intumescent paint composition further comprises
(e) optionally water.

The acid formed from the acid donor upon thermal decomposition may be phosphoric acid, more preferably polyphosphoric acid.

The temperature of the thermal decomposition of the acid donor may be 100°C or higher.

The reaction temperature of the reaction of the carbon source with the acid formed from the acid donor may occur at 200°C or higher, or 300°C or higher.

The carbonaceous char may comprise the esters of the carbon source and the acid formed by the acid donor and decomposition products of the esters of the carbon source, and the acid formed by the acid donor.

The temperature to release gases originating from the blowing agent upon thermal decomposition may be 280°C to 380°C or higher.

According to a preferred embodiment of the present invention one or more of said copolymer(s), preferably each of said copolymer(s), comprise
i) from 2 wt.-% to 98 wt.-%, based on the total weight of said copolymer(s), of monomer units obtainable from vinyl acetate, and
ii) from 2 wt.-% to 98 wt.-%, based on the total weight of said copolymer(s), of one or more type(s) of monomer units obtainable from the vinyl ester monomers represented by formula (1).

According to a preferred embodiment of the present invention the composition of the invention is in the form of an aqueous emulsion or dispersion; preferably comprising a water content of from 15 wt.-% to 75 wt.-%, more preferably comprising a water content of from 40 wt.-% to 60 wt.-%, particularly preferably comprising a water content of 50 wt.-%, based on the total weight of the composition.

The term "aqueous emulsion" or "aqueous dispersion" refers to emulsions or dispersions containing water as the main continuous (carrier) phase. More specifically, the terms are intended to mean an emulsion or a dispersion in which inter alia the one or more copolymers of the invention are dispersed in the form of (solid or liquid) particles or droplets within the aqueous phase forming the continuous phase of the emulsion/dispersion, wherein at least 50 wt.-% of the solvent is water, based on the total weight of the solvent in the emulsion/dispersion.

The polymeric binder may be dispersed or emulsified in an aqueous medium. The carrier of the aqueous (polymer) emulsion may be water.

In one embodiment of the present invention the aqueous emulsion further comprises
a pigment, preferably titanium dioxide; and/or
a filler, preferably a filler selected from the group consisting of fiberglass, mineral fibers, kaolin, talc, aluminum oxide, aluminium hydroxide, magnesium hydroxide, precipitated silica, silicates, hollow microspheres, and crushed cellulose; and/or
a dispersing agent; and/or
a thickener; and/or
a solvent/coalescing agent; and/or
a wetting agent; and/or
a preservative, preferably a biocide preservative; and/or
one or more other additives.

The term "pigment" as used herein includes compounds that provide color or opacity to the composition.

The term "filler" as used herein is understood as meaning a substance which is essentially insoluble in the application medium, for example the intumescent paint composition according to the invention and which is used in particular for increasing one or more of the volume, the color and the opacity.

The term "dispersing agent" as used herein refers to an agent that stabilizes the dispersed particles or droplets, i.e. keeping them stable in the dispersion or emulsion, and effectively preventing or at least minimizing their re-agglomeration. This enables the desired viscosities of the resultant dispersions or emulsion, since in this way flowable systems which can be handled well (and even at high concentrations) in practice.

The term "thickener" as used herein refers to compounds which increases the viscosity of a composition.

The terms "solvent" or "coalescing agent" herein refers to a slow-evaporating solvent that fuses polymer particles into a continuous film under ambient conditions.

The term "wetting agent" means a surfactant having a wetting property, and further, denotes an excipient which lowers the surface tension of water or other liquids.

The term "preservative" refers to an agent which preserves a composition with regard to microbial, particularly bacterial or fungal, growth.

The term "additive" refers to an additive included in a composition to enhance its physical or chemical properties and provide desired results.

According to a preferred embodiment of the present invention the one or more copolymers comprise the monomer units obtainable from vinyl acetate in a range from 25 wt.-% to 75 wt.-%, preferably from 25 wt.-% to 65 wt.-% or from 35 wt.-% to 65 wt.-%, or from 40 wt.-% to 60 wt.-%, based on the total weight of the polymer binder, preferably based on the total weight of the one or more copolymers.

According to a preferred embodiment of the present invention the one or more copolymers comprise the monomer units obtainable from the vinyl ester monomers represented by formula (1) in a range from 30 wt.-% to 80 wt.-%, preferably from 30 wt.-% to 70 wt.-%, further preferred or from 40 wt.-% to 70 wt.-%, or from 40 wt.-% to 60 wt.-%, based on the total weight of the one or more copolymers.

In one embodiment of the present invention the one or more copolymers comprise the monomer units obtainable from the vinyl ester monomers represented by formula (1) in a range from 25 wt.-% to 75 wt.-%, preferably from 35 wt.-% to 75 wt.-%, further preferred or from 35 wt.-% to 65 wt.-%, or from 40 wt.-% to 60 wt.-%, based on the total weight of the one or more copolymers.

According to a preferred embodiment of the present invention the total number of carbon atoms of R₁, R₂, and R₃ is in the range from 6 to 11.

According to a preferred embodiment of the present invention one or more, preferably all, of the one or more copolymers are effective to release acids represented by formula 2 upon thermal decomposition: 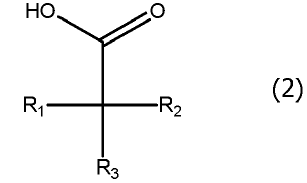
, wherein R₁, R₂, R₃ are as defined herein,
wherein the temperature of the thermal decomposition is preferably 200°C or higher, 250°C or higher, or 300°C or higher.

"Thermal decomposition", as used herein, refers to a decomposition or a chemical breakdown of a substance or compound that can be caused by heat. The one or more copolymers of the present invention exhibit a specific thermal degradation mechanism in the course of thermal decomposition as described above (i-chain stripping process -deacetylation- combined with chain scission reactions leading to polyene formation and ii- its chain scission). During the thermal decomposition or the thermal degradation mechanism inter alia bonds in the one or more type(s) of monomer units obtainable from the vinyl ester monomers represented by formula (1) are weakened, which in the further course leads to the release acids represented by formula 2.

According to a preferred embodiment of the present invention the polymeric binder/composition comprises, in addition to the copolymers:
iii) from 0 wt.-% to 20 wt.-%, or 0 wt.-% to 10 wt.-%, or 0 wt.-% to 5 wt.-%, based on the total weight of the polymeric binder (all polymers), of monomer units other than obtainable from vinyl acetate and obtainable from the vinyl ester monomers represented by formula (1). In one embodiment said monomer units other than obtainable from vinyl acetate and obtainable from the vinyl ester monomers represented by formula (1) are selected from the group consisting of ethylene, acrylates, methacrylates, acrylic acid, methacrylic acid, acrylamides, methacrylamides, vinyl amides, and styrenes, preferably ethylene. Preferably all copolymers which are used then comprise vinylacetate and one or more monomers of formula (1), preferably, the momomers of formula (1) are comprised in at least 30 wt.%. In addition, or as an alternative, the polymeric binder comprises at least 80 wt.-%, or at least 90 wt.%, or at least 95 wt.% of copolymers. Further preferred, the copolymers consist of monomer units obtainable from vinyl acetate and obtainable from the vinyl ester monomers represented by formula (1).

Accordingly, in one embodiment, the present invention refers to an intumescent paint composition comprising
(a) a polymeric binder,
   wherein the polymeric binder comprises one or more copolymers,
   wherein the one or more copolymers, in total, comprise, preferably the one or more copolymers consist of:
      i) from 20 wt.-% to 75 wt.-%, based on the total weight of the polymeric binder, and
      ii) from 25 wt.-% to 80 wt.-%, based on the total weight of the polymeric binder, of one or more type(s) of monomer units obtainable from the vinyl ester monomers represented by formula (1): 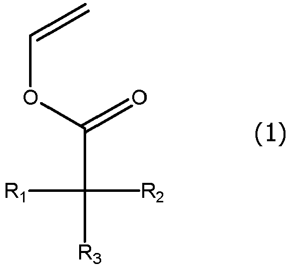
   , wherein R₁, R₂, R₃ are independently selected from the group consisting of hydrogen and linear or branched unsubstituted C₁₋₁₁ alkyl groups, wherein the total number of carbon atoms of R₁, R₂, and R₃ is in the range from 1 to 13;
   wherein the polymeric binder in total comprises from 0 wt.-% to 20 wt.-%, or 0 wt.-% to 10 wt.-%, or 0 wt.-% to 5 wt.-%, based on the total weight of the polymeric binder, of monomer units other than obtainable from vinyl acetate and obtainable from the vinyl ester monomers represented by formula (1), and wherein
   the only monomer units in the polymer binder other than obtainable from vinyl acetate and obtainable from the vinyl ester monomers represented by formula (1) are selected from the group consisting of ethylene, acrylates, methacrylates, acrylic acid, methacrylic acid, acrylamides, methacrylamides, vinyl amides, and styrenes, preferably ethylene
(b) an acid donor;
(c) a carbon source; and
(d) a blowing agent, preferably, wherein the components (a)-(d) are as further defined at other passages herein.

Accordingly, in one embodiment, the present invention refers to an intumescent paint composition comprising
(a) a polymeric binder,
   wherein the polymeric binder comprises one or more copolymers,
   wherein the one or more copolymers, in total, comprise, preferably the one or more copolymers consist of:
      i) from 20 wt.-% to 75 wt.-%, based on the total weight of the polymeric binder, and
      ii) from 25 wt.-% to 80 wt.-%, based on the total weight of the polymeric binder, of one or more type(s) of monomer units obtainable from the vinyl ester monomers represented by formula (1): 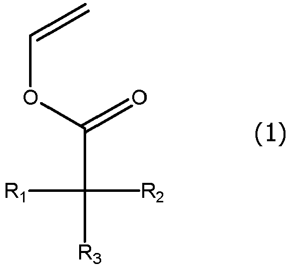
   , wherein R₁, R₂, R₃ are independently selected from the group consisting of hydrogen and linear or branched unsubstituted C₁₋₁₁ alkyl groups, wherein the total number of carbon atoms of R₁, R₂, and R₃ is in the range from 1 to 13;
   wherein the polymeric binder in total comprises from 0 wt.-% to 20 wt.-%, or 0 wt.-% to 10 wt.-%, or 0 wt.-% to 5 wt.-%, based on the total weight of the polymeric binder, of monomer units other than obtainable from vinyl acetate and obtainable from the vinyl ester monomers represented by formula (1)
(b) an acid donor;
(c) a carbon source; and
(d) a blowing agent, preferably, wherein the components (a)-(d) are as further defined at other passages herein.

Accordingly, in one embodiment, the present invention refers to an intumescent paint composition comprising
(a) a polymeric binder,
   wherein the polymeric binder comprises, preferably consists of, at least 80 wt.-%, or at least 90 wt.%, or at least 95 wt.%, based on the total weight of the polymeric binder, of one or more copolymers,
   wherein the one or more copolymers, in total, comprise, preferably the one or more copolymers consist of:
      i) from 20 wt.-% to 75 wt.-%, based on the total weight of the one or more copolymers, and
      ii) from 25 wt.-% to 80 wt.-%, based on the total weight of the one or more copolymers, of one or more type(s) of monomer units obtainable from the vinyl ester monomers represented by formula (1): 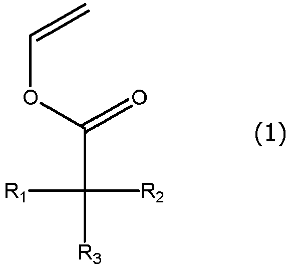
   , wherein R₁, R₂, R₃ are independently selected from the group consisting of hydrogen and linear or branched unsubstituted C₁₋₁₁ alkyl groups, wherein the total number of carbon atoms of R₁, R₂, and R₃ is in the range from 1 to 13; and
   from 0 wt.-% to 20 wt.-%, or 0 wt.-% to 10 wt.-%, or 0 wt.-% to 5 wt.-%, based on the total weight of the polymeric binder, of a polymer or copolymer comprising, preferably consisting of, of monomer units other than obtainable from vinyl acetate and obtainable from the vinyl ester monomers represented by formula (1), and wherein
   the only monomer units in the polymer binder other than obtainable from vinyl acetate and obtainable from the vinyl ester monomers represented by formula (1) are selected from the group consisting of ethylene, acrylates, methacrylates, acrylic acid, methacrylic acid, acrylamides, methacrylamides, vinyl amides, and styrenes, preferably ethylene
(b) an acid donor;
(c) a carbon source; and
(d) a blowing agent,
preferably, wherein the components (a)-(d) are as further defined at other passages herein.

Accordingly, in one embodiment, the present invention refers to an intumescent paint composition comprising
(a) a polymeric binder,
   wherein the polymeric binder comprises, preferably consists of, one copolymer, wherein the one copolymer, in total, comprises, preferably the one copolymer consists of:
   i) from 20 wt.-% to 75 wt.-%, based on the total weight of the copolymer, and
   ii) from 25 wt.-% to 80 wt.-%, based on the total weight of the one copolymer, of one or more type(s) of monomer units obtainable from the vinyl ester monomers represented by formula (1): 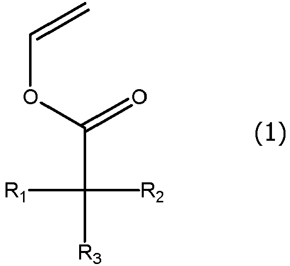 , wherein R₁, R₂, R₃ are independently selected from the group consisting of hydrogen and linear or branched unsubstituted C₁₋₁₁ alkyl groups, wherein the total number of carbon atoms of R₁, R₂, and R₃ is in the range from 1 to 13; and
(b) an acid donor;
(c) a carbon source; and
(d) a blowing agent,
preferably, wherein the components (a)-(d) are as further defined at other passages herein.

Monomer units obtainable from the monomers selected from the group consisting of ethylene, acrylates, methacrylates, acrylic acid, methacrylic acid, acrylamides, methacrylamides, vinyl amides, and styrenes, preferably ethylene, can be comprised by the polymeric binder, e.g., via an addition of a polymer (homo- or copolymer) comprising said monomer units to a one or more copolymers consisting of monomer units obtainable from vinyl acetate and one or more type(s) of monomer units obtainable from the vinyl ester monomers represented by formula (1). In addition, for example, a terpolymer consisting of said monomer units besides monomer units obtainable from vinyl acetate and one or more type(s) of monomer units obtainable from the vinyl ester monomers represented by formula (1), would be conceivable

According to a preferred embodiment of the present invention the polymeric binder is present in an amount of 5 wt.-% to 40 wt.-%, preferably in an amount of 5 wt.-% to 30 wt.-%, more preferably in an amount of 5 wt.-% to 25 wt.-%, based on the total weight of the composition.

In one embodiment the polymeric binder is present in an amount of 10 wt.-% to 30 wt.-%, based on the total weight of the composition.

According to a preferred embodiment of the present invention the one or more copolymers have
a glass transition temperature ranging from 0 to 40°C as measured using differential scanning calorimetry; and/or
a minimum film formation temperature ranging from 0 to 30°C as measured according to minimum film forming temperature instrument; and/or total residual monomers in the emulsion obtained after the synthesis via emulsion polymerization below 1000 ppm, or below 500 ppm, as measured according to gas chromatography.

In one embodiment the polymeric binder comprises, preferably consists of, one copolymer, wherein the one copolymer, in total, comprises, preferably the one copolymer consists of:
i) from 20 wt.-% to 75 wt.-%, based on the total weight of the copolymer, and
ii) from 25 wt.-% to 80 wt.-%, based on the total weight of the one copolymer, of one or more type(s) of monomer units obtainable from the vinyl ester monomers represented by formula (1):

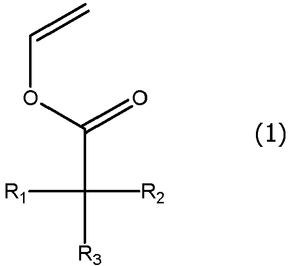

, wherein R₁, R₂, R₃ are independently selected from the group consisting of hydrogen and linear or branched unsubstituted C₁₋₁₁ alkyl groups, wherein the total number of carbon atoms of R₁, R₂, and R₃ is in the range from 1 to 13;
wherein the one copolymer has
   a glass transition temperature ranging from 0 to 40°C as measured using differential scanning calorimetry; and/or
   a minimum film formation temperature ranging from 0 to 30°C as measured according to minimum film forming temperature instrument; and/or
   total residual monomers in the emulsion obtained after the synthesis via emulsion polymerization below 1000 ppm, or below 500 ppm, as measured according to gas chromatography.

The glass transition temperature of the one or more copolymers can be measured using differential scanning calorimetry upon heating at 10°C/minute and considering mid-points.

Prior art emulsions such as commercial waterborne emulsions for intumescent coatings based on vinyl neodecanoate, vinyl neo nonanoate and combinations thereof typically have higher contents of residual monomers (i.e. vinyl neodecanoate and/or vinyl neo nonanoate) than the compositions or emulsions of the present invention.

In one embodiment of the present invention the acid donor comprises or consists of one or more compounds selected from the group consisting of ammonium phosphates and polyphosphates;
preferably wherein the acid donor comprises or consists of one or more compounds selected from the group consisting of ammonium polyphosphate, trichloroethyl phosphate, trichloropropyl phosphate, melamine pyrophosphate and triphenyl phosphate;
more preferably the acid donor comprises or consists of ammonium polyphosphate and optionally one or more compounds selected from the group consisting of ammonium phosphates and polyphosphates.

In one embodiment of the present invention the acid donor is present in an amount of 5 wt.-% to 50 wt.-%, or 10 wt.-% to 30 wt.-%, or 5 wt.-% to 30 wt.-%, or 10 wt.-% to 25 wt.-%, or 5 wt.-% to 25 wt.-%, based on the total weight of the composition.

In one embodiment of the present invention the carbon source comprises or consists of one or more compounds selected from the group consisting of polyols;
preferably the polyols are selected from the group consisting of mono-, di-, and tripentaerythritol or their mixtures, glycerine, sorbitol, resorcinol, trimethylolmelamine, triethylene glycol, phenol-formaldehydes, phenols, glucose, maltose, mannitol, polyvinyl alcohol, cellulose, dextrin and starch;
more preferably the carbon source comprises monopentaerythritol and optionally one or more further polyols.

In one embodiment of the present invention the carbon source is present in an amount of 5 wt.-% to 20 wt.-%, or 5 wt.-% to 10 wt.-%, or 5 wt.-% to 8 wt.-%, based on the total weight of the composition.

In one embodiment of the present invention the blowing agent comprises or consists of one or more compounds selected from the group consisting of organic amines, amides and chloroparaffins;
preferably wherein the blowing agent comprises or consists of one or more compounds selected from the group consisting of urea, butylurea, dicyandiamide, casein, urotropine, guanidine, sulfamides, polyamide and aminoformaldehyde oligomers, melamine and its derivatives, preferably melamine phosphate, melamine cyanurate, melamine borate, melamine polyphosphate, and chloroparaffins;
particularly preferred wherein the blowing agent comprises or consists of melamine and optionally one or more further blowing agents, such as one or more further blowing agents selected from the group consisting of urea, butylurea, dicyandiamide, casein, urotropine, guanidine, sulfamides, polyamide and aminoformaldehyde oligomers, melamine and its derivatives, preferably melamine phosphate, melamine cyanurate, melamine borate, melamine polyphosphate, and chloroparaffins.

In one embodiment of the present invention the blowing agent is present in an amount of 5 wt.-% to 20 wt.-%, based on the total weight of the composition.

In one embodiment of the present invention the weight ratio of the polymeric binder to the acid donor to the carbon source to the blowing agent is from 1.0-2.5:2.5-3.5:0.5-1.5:0.5-1.5.

The present invention also refers to a paint or coating, preferably emulsion paint, comprising or consisting of the intumescent paint composition as defined herein.

The term "paint" is used to refer to materials which may be applied to a surface of an object using any suitable applications means, non-limiting examples of which include brushing, spraying, vapor deposition, spin coating, rolling, and rubbing, to provide the surface with a desired decorative finish and/or functional finish.

The term "emulsion paint" refers aqueous emulsions comprising the compositions of the invention including the polymeric binder. The polymeric binder might act as filmforming component. An emulsion paint as used herein might also be called latex paint as used in the prior art.

The present invention also refers to a use of one or more copolymers as defined herein or an intumescent paint composition as defined herein for intumescent coatings.

The present invention also refers to a preparation of an intumescent paint composition by combining (a), (b), (c) and (d) as defined herein to obtain said intumescent coating.

Intumescent paint compositions can be prepared by combining and homogenization (e.g. stirring) of said components using mixing equipment or, more generally, equipment for homogenization (such as a double jacket high speed mixer). During homogenization cooling of the reactor in which homogenization is conducted may be applied. Additional additives that can be added in the process include water (e.g. demi water), a thickener, a wetting agent, a dispersing agent, a biocide preservative, and a pigment (preferably titanium dioxide). For example, with the exception of the binder and the coalescing agent, these components can be combined and homogenized in a first step, followed by a second step in which the binder and the coalescing agent are finally added; subsequently, in a further third step, additional solvent, i.e. water, could be added.

The present invention also refers to an intumescent coating by applying an intumescent paint composition as defined herein onto a surface and drying said intumescent paint composition.

Intumescent coating is applied on steel plate already coated with primer. Coated plate is dried for 2 weeks at room temperature. The dry film thickness is 1 mm.

The present invention also refers to a coated article comprising an intumescent coating obtained by applying and drying an intumescent paint composition as defined herein.

The term "coated article" refers to an article comprising a substrate coated with one or more layers comprising the intumescent coating formed by the intumescent paint composition. Preferred articles may be metal and wood structures or materials such as plastics, textiles, metal, and wood, wherein the intumescent coating does not modify their intrinsic properties.

According to a preferred embodiment of the present invention in the intumescent coating of the coated article
the polymeric binder is present in an amount of 5 wt.-% to 30 wt.-%, based on the total weight of the coating; and/or
the acid donor is present in an amount of 10 wt.-% to 40 wt.-%, based on the total weight of the coating; and/or
the carbon source is present in an amount of 5 wt.-% to 20 wt.-%, based on the total weight of the coating; and/or
the blowing agent is present in an amount of 5 wt.-% to 20 wt.-%, based on the total weight of the coating.

### Description of the Figures

Figure 1: Figure 1 shows a photograph of the intumescent coating of Intumescent coating 1 after heat exposure.
Figure 2: Figure 2 shows a photograph of the intumescent coating of Intumescent coating 2 after heat exposure.
Figure 3: Figure 3 shows a photograph of the intumescent coating of Intumescent coating 3 after heat exposure.
Figure 4: Figure 4 shows a photograph of the intumescent coating of Intumescent coating 4 after heat exposure.
Figure 5: Figure 5 shows a photograph of the intumescent coating of Intumescent coating 5 after heat exposure.
Figure 6: Figure 6 shows a photograph of the intumescent coating of Intumescent coating 7 after heat exposure.

### Examples

### 1. Synthesis of polymer binders by emulsion polymerisation

The emulsion polymerization of vinyl acetate is extensively described in H. Yildirim Erbil's the book "Vinyl Acetate Emulsion Polymerization and Copolymerization with Acrylic Monomers".

A semi-continuous process is used to synthesise polymeric binders further used in the intumescent coatings. Polymerization was performed in a 3L double-jacket reactor, equipped with a mechanical stirrer, a temperature control system, an inlet for feeding pre-emulsion, an inlet for feeding initiator solution and a reflux condenser.

The initial reactor charge is prepared by mixing the ingredients in the order shown in Tables 1 and 2. Hydroxyethyl cellulose should be added to the reactor at room temperature with good mixing. Then the reactor is heated at 76 °C under nitrogen. The pre-emulsion is prepared following the order listed with good mixing. At 60 °C, nitrogen is stopped, 10wt% of the pre-emulsion are added to the reactor. Temperature continues to raise to 76 °C. When reflux stops and temperature is stabilized at 76 °C, the remaining pre-emulsion and the initiator solution are continuously added in separated lines during respectively 3 hours and 3 hours 15 minutes, maintaining temperature at 76 °C.

After completion of the initiator solution, the temperature is increased to 80°C and maintained for another 30 minutes.

Then the temperature is cooled down to 55°C, the feed of monomer conversion booster with 2 separate lines in started for 90 minutes.

The latex is then cooled down to below 35°C. The biocide is added and the latex is filtered to proper containers.

Examples 1, 2 and 3 respectively refer to an homopolymer of vinyl acetate, a vinyl acetate-VeoVa 10 copolymer with 30 wt% of VeoVa 10, or a vinyl acetate-VeoVa 10 copolymer with 50 wt% of VeoVa 10.

**Table 1: Emulsion recipes of the Comparative Examples.**

| | **Weight (g)** | | |
|---|---|---|---|
| **Initial reactor charge** | **Comparative Example 1** | **Comparative Example 2** | **Comparative Example 3** |
| Demineralised water | 350 | 350 | 350 |
| Anionic surfactant | 1,5 | 1,5 | 1,5 |
| Buffer | 1,5 | 1,5 | 1,5 |
| Initiator | 1 | 1 | 1 |
| Hydroxy ethyl cellulose | 5 | 5 | 5 |

| **Monomer pre-emulsion** | | | |
|---|---|---|---|
| Demineralised water | 350 | 350 | 350 |
| Buffer | 1,5 | 1,5 | 1,5 |
| Anionic surfactant | 1,5 | 1,5 | 1,5 |
| Non-ionic emulsifier | 40 | 40 | 40 |
| Vinyl Acetate | 1000 | 850 | 850 |
| VeoVa 10 | 0 | 0 | 150 |
| Butyl acrylate | 0 | 150 | 0 |

| **Initiator solution** | | | |
|---|---|---|---|
| Demineralised water | 85 | 85 | 85 |
| Initiator | 1 | 1 | 1 |

| **Monomers conversion booster** | | | |
|---|---|---|---|
| Demineralised water | 18 | 18 | 18 |
| Oxidizer | 1,4 | 1,4 | 1,4 |
| Demineralised water | 20 | 20 | 20 |
| Reducing agent | 1,2 | 1,2 | 1,2 |
| Biocide | 2 | 2 | 2 |

Anionic surfactant: Rhodacal^{®} DS 10 ex Solvay; Buffer: Sodium bicarbonate; Initiator: Potassium persulfate; Hydroxy ethyl cellulose: here, e.g., Cellosize^{®} QP 300 ex Dow; Nonionic emulsifier: Abex^{®} 2535 ex Solvay; Oxidizer: terButyl Hydro Peroxide (70% aq. sol.); Reducing agent: Bruggolite^{®} FF6M ex Bruggeman; Biocide: Acticide^{®} MV ex Thor.

**Table 2: Emulsion recipes of the Examples.**

| | **Weight (g)** | |
|---|---|---|
| **Initial reactor charge** | **Example 1** | **Example 2** |
| Demineralised water | 350 | 350 |
| Anionic surfactant | 1,5 | |
| Buffer | 1,5 | 2 |
| Initiator | 1 | 1 |
| Sulfosuccinate anionic surfactant | | 1,7 |
| Hydroxy ethyl cellulose | 5 | 5 |

| **Monomer pre-emulsion** | | |
|---|---|---|
| Demineralised water | 350 | 350 |
| Buffer | 1,5 | 2 |
| Anionic surfactant | 1,5 | 1,5 |
| Non-ionic emulsifier | 40 | 40 |
| Vinyl Acetate | 700 | 500 |
| VeoVa 10 | 300 | 500 |
| Butyl acrylate | 0 | 0 |

| **Initiator solution** | | |
|---|---|---|
| Demineralised water | 85 | 85 |
| Initiator | 1 | 1 |

| **Monomers conversion booster** | | |
|---|---|---|
| Demineralised water | 18 | 18 |
| Oxidizer | 1,4 | 1,4 |
| Demineralised water | 20 | 20 |
| Reducing agent | 1,2 | 1,2 |
| Biocide | 2 | 2 |

Sulfosuccinate anionic surfactant: here, e.g., Aerosol A 102 ex Solvay.

### 2. Characterization of the polymeric binders

**Table 3: Dried polymeric binder films properties.**

| **Dried polymeric binder films** | **Comparative Example 1** | **Comparative Example 2** | **Comparative Example 3** | **Example 1** | **Example 2** |
|---|---|---|---|---|---|
| **Water contact angle** (°) | 35 | 28 | 57 | 67 | 71 |
| **Alkali resistance** (% of hydrolysed ester bonds) | 93 | 86 | 47 | 16 | 3 |
| **Water spot resistance rating** (0: worst; 10: best) | 1 | 1 | 3 | 6 | 5 |

As can be seen from Comparative Examples 1 and 3, and Examples 1 and 2, when the VeoVa 10 content in the polymeric binder or copolymer increases, the hydrophobic character (characterized by water contact angle and water spot resistance measured on dried polymer films) is increased. Addition of butyl acrylate (Comparative Example 2) leads to a lower water contact angle, and the hydrolysis resistance is still poor compared to the addition of same level of VeoVa (Comparative Example 3) that provides much higher resistance to water and hydrolysis.

Besides, VeoVa 10 provides an outstanding protection against hydrolysis when copoplymerized with vinyl acetate. Best hydrolysis resistance is obtained with highest VeoVa 10 content.

### 3. Formulation of intumescent coatings

Intumescent coatings are produced on the basis of corresponding intumescent paint formulations, which in turn are prepared in a double jacket high speed mixer following the process described below while including a polymer binder according to the invention or a comparative binder.

Table 4 exemplifies a composition of an intumescent paint formulation.

**Table 4: Intumescent paint formulation.**

| | | **Weight %** |
|---|---|---|
| **Pigment Paste** | | |
| 1 | Demi water | 15,25 |
| 2 | Thickener | 0,75 |
| 3 | Wetting & dispersing agent | 1 |
| 4 | Biocide preservative | 0,03 |
| 5 | Titanium dioxide | 9 |
| 6 | Carbon source | 9,25 |
| 7 | Blowing agent | 9,5 |
| 8 | Acid donor | 26 |

| **Let down** | | |
|---|---|---|
| 9 | Polymeric binder with water (50% solids content) | 25 |
| 10 | Demi water | 2,95 |
| 11 | Coalescing agent | 1,3 |

Thickener: Polysaccharide (here, e.g., Deuteron^{®} VT 819 ex Deuteron); Wetting & dispersing additive: Disperbyk^{®} 190 ex Byk; Biocide: Acticide^{®} MV ex Thor; Titanium dioxide: Kronos^{®} 2300 ex Kronos; Carbon source: pentaerythritol (here, e.g., Charmor^{®} PM40 ex Perstorp); Blowing agent: melamine; Acid donor: ammonium polyphosphate (here, e.g., Exolit^{®} AP 422 ex Clariant); Coalescing agent: 2,2,4-Trimethyl-1,3-pentanediol monoisobutyrate (here, e.g., Texanol^{®} ex Eastman).

Paint preparation procedure: the ingredients 1 to 4 are mixed under gentle stirring for 5 minutes. Pigment and intumescent additives 5 to 8 are added. The stirring speed is gradually increased to 700-1200 rpm and kept for 30 minutes while cooling the reactor. The emulsion of the respective polymeric binder of the Comparative Examples and the Examples (Ingredient 9) and water are added under gentle stirring and stirred at 600rpm for 10 minutes. The solvent is finally added and stirring is kept for extra 10 minutes.

Polymeric binder from Comparative Example 1 has been formulated into an intumescent paint using the paint formulation shown in Table 4, to give Intumescent coating 6.

Polymeric binders from examples 1 and 2 have been formulated into intumescent paints using the paint formulation shown in Table 4, to give respectively Intumescent coatings 7 and 8.

Polymeric binders from Comparative Examples 1, 2 and 3 have been formulated into intumescent paints using a proprietary formulation (not specified herein), to give Intumescent coatings 1, 2 and 3.

Polymeric binders from examples 1 and 2 have been formulated into intumescent paints using said proprietary formulation, to give Intumescent coatings 4 and 5.

**Table 5: List of intumescent paints.**

| | Proprietary formulation | Formulation shown in Table 4 |
|---|---|---|
| Polymeric binder of Comparative Example 1 | Intumescent coating 1 | Intumescent coating 6 |
| Polymeric binder of Comparative Example 2 | Intumescent coating 2 | - |
| Polymeric binder of Comparative Example 3 | Intumescent coating 3 | - |
| Polymeric binder of Example 1 | Intumescent coating 4 | Intumescent coating 7 |
| Polymeric binder of Example 2 | Intumescent coating 5 | Intumescent coating 8 |

### 4. Intumescent coatings characterization

**Table 6: Properties of Intumescent coating examples 1, 2, 3, 4 and 5.**

| | **Intumescent coating 1** | **Intumescent coating 2** | **Intumescent coating 3** | **Intumescent coating 4** | **Intumescent coating 5** |
|---|---|---|---|---|---|
| **Polymeric binder** | Comparative Example 1 | Comparative Example 2 | Comparative Example 3 | Example 1 | Example 2 |
| **Substrate** | Sandblast steel plates 28*28cm*5mm | | | | |
| **Application & drying procedure** | Zinc phosphate primer: 80-120µm wet - 1 week room temperature drying | | | | |
| | Paint: 1mm DRY - 2 weeks room temperature drying | | | | |
| **Fire testing procedure** | Following of the fire test analogous DIN 4102 Part 8 | | | | |
| **Time to reach 500°C** (minutes - panel back) | 73 | 65 | 77 | 86 | 94 |
| **Foam expansion** (cm) | 3 | 1.6 | 4 | 4.8 | 5.2 |

As can be seen from Intumescent coatings 1, 3, 4 and 5 having increasing amount of VeoVa 10 (Table 5), the more VeoVa 10 in the polymeric binder, the higher the fire resistance of the intumescent coating.

Introduction of VeoVa 10 in vinyl acetate-based polymeric binder enables to reach outstanding fire resistance performance of intumescent coatings. Compared to the same level of butyl acrylate used as comonomer (15wt%, Intumescent coatings 2 and 3), introduction of VeoVa 10 improves the intumescent properties, whereas butyl acrylate decreases resistance to fire.

The results in Table 6 show that Intumescent coating 4 (30 wt% of VeoVa) and Intumescent coating 5 (50 wt% of VeoVa) perform better than the coatings of the Comparative Examples.

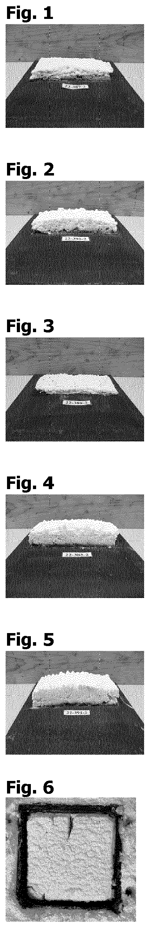

Furthermore, Figures 1 to 6 show photographs of the intumescent coatings after heat exposure. As can be seen from Figure 6, swelling is also observed for Intumescent coating 7.

### List of citations

1. J. T. Pimenta et al., Effect of binder on performance of intumescent coatings. J. Coat. Technol. Res., 2016, 13, 227 - 238.
2. K. Kalafat et al., Comparison of fire resistance of polymers in intumescent coatings for steel structures. East.-Eur. J. Enterp. Technol., 2020, 4, 45 - 54.
3. Y-C. Xia, Thermal Property of Waterborne Ultrathin Vac-veova Latex Intumescent Fire Retardant Coatings for Structural Steel. Materials Science and Engineering, 2017, 347 - 354.
4. Y. H. Erbil, Vinyl Acetate Emulsion Polymerization and Copolymerization with Acrylic Monomers, CRC Press, Boca Raton, 2000**.**
5. US 2015/0291810 A1
6. X. Q. Wu et al., Miniemulsion and macroemulsion copolymerization of vinyl acetate with vinyl versatate. J. Appl. Polym. Sci., 2002, 85, 2219 - 2229.

## Claims

1. An intumescent paint composition comprising
(a) a polymeric binder,
wherein the polymeric binder comprises one or more copolymers,
wherein the one or more copolymers, in total, comprise
i) from 20 wt.-% to 75 wt.-%, based on the total weight of the polymeric binder, of monomer units obtainable from vinyl acetate, and
ii) from 25 wt.-% to 80 wt.-%, based on the total weight of the polymeric binder, of one or more type(s) of monomer units obtainable from the vinyl ester monomers represented by formula (1): 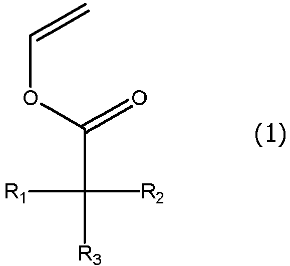
, wherein R₁, R₂, R₃ are independently selected from the group consisting of hydrogen and linear or branched unsubstituted C₁₋₁₁ alkyl groups, wherein the total number of carbon atoms of R₁, R₂, and R₃ is in the range from 1 to 13;
(b) an acid donor;
(c) a carbon source; and
(d) a blowing agent.

2. The composition according to claim 1, wherein one or more of said copolymer(s), preferably each of said copolymer(s), comprise
i) from 2 wt.-% to 98 wt.-%, based on the total weight of said copolymer(s), of monomer units obtainable from vinyl acetate, and
ii) from 2 wt.-% to 98 wt.-%, based on the total weight of said copolymer(s), of one or more type(s) of monomer units obtainable from the vinyl ester monomers represented by formula (1).

3. The composition according to claim 1 or 2, which is in the form of an aqueous emulsion or dispersion; preferably comprising a water content of from 15 wt.-% to 75 wt.-%, based on the total weight of the composition.

4. The composition according to any of the preceding claims, wherein the one or more copolymers comprise the monomer units obtainable from vinyl acetate in a range from 25 wt.-% to 75 wt.-%, preferably from 25 wt.-% to 65 wt.-% or from 35 wt.-% to 65 wt.-%, or from 40 wt.-% to 60 wt.-%, based on the total weight of the polymer binder, preferably based on the total weight of the one or more copolymers.

5. The composition according to any of the preceding claims, wherein the one or more copolymers comprise the monomer units obtainable from the vinyl ester monomers represented by formula (1) in a range from 30 wt.-% to 80 wt.-%, preferably from 30 wt.-% to 70 wt.-%, further preferred or from 40 wt.-% to 70 wt.-%, or from 40 wt.-% to 60 wt.-%, based on the total weight of the one or more copolymers.

6. The composition according to any of the preceding claims, wherein the total number of carbon atoms of R₁, R₂, and R₃ is in the range from 6 to 11.

7. The composition according to any of the preceding claims, wherein one or more, preferably all, of the one or more copolymers are effective to release acids represented by formula 2 upon thermal decomposition: 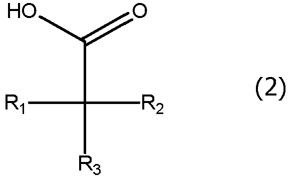
, wherein R₁, R₂, R₃ are as defined in claim 1 or 6,
wherein the temperature of the thermal decomposition is preferably 200°C or higher, 250°C or higher, or 300°C or higher.

8. The composition according to any of the preceding claims, wherein the polymeric binder further comprises
iii) from 0 wt.-% to 20 wt.-%, based on the total weight of the polymeric binder, of monomer units obtainable from the monomers selected from the group consisting of ethylene, acrylates, methacrylates, acrylic acid, methacrylic acid, acrylamides, methacrylamides, vinyl amides, and styrenes, preferably ethylene.

9. The composition according to any of the preceding claims, wherein the one or more copolymers have
a glass transition temperature ranging from 0 to 40°C as measured using differential scanning calorimetry; and/or
a minimum film formation temperature ranging from 0 to 30°C as measured according to minimum film forming temperature instrument; and/or
total residual monomers in the emulsion obtained after the synthesis via emulsion polymerization below 1000 ppm, or below 500 ppm, as measured according to gas chromatography.

10. Paint, preferably emulsion paint, comprising or consisting of the intumescent paint composition as defined in any of claims 1 to 9.

11. Use of one or more copolymers as defined in claim 1 or an intumescent paint composition as defined in any of claims 1 to 9 for intumescent coatings.

12. Preparation of an intumescent paint composition by combining (a), (b), (c) and (d) as defined in any of claims 1 to 9 to obtain said intumescent coating.

13. Preparation of an intumescent coating by applying an intumescent paint composition as defined in any of claims 1 to 9 onto a surface and drying said intumescent paint composition.

14. Coated article comprising an intumescent coating obtained by applying and drying an intumescent paint composition as defined in any of claims 1 to 9.

15. The coated article according to claim 14, wherein in the intumescent coating the polymeric binder is present in an amount of 5 wt.-% to 30 wt.-%, based on the total weight of the coating; and/or
the acid donor is present in an amount of 10 wt.-% to 40 wt.-%, based on the total weight of the coating; and/or
the carbon source is present in an amount of 5 wt.-% to 20 wt.-%, based on the total weight of the coating; and/or
the blowing agent is present in an amount of 5 wt.-% to 20 wt.-%, based on the total weight of the coating.
